# EUROPEAN PATENT APPLICATION

(11) **EP 4 074 608 A1**
(43) Date of publication of application: **19.10.2022**
(21) Application number: 21169010.2
(22) Date of filing: 16.04.2021
(51) Int. Cl.: B64G 3/00, B64G 1/66, G01S 17/933, B64G 1/22

(54) **SATELLITE COATING AND LASER DETECTION OF SATELLITES**

(71) Applicant: Technische Universität Darmstadt, 64289 Darmstadt (DE); Österreichische Akademie der Wissenschaften, 1010 Wien (AT)
(72) Inventor: Sauer, Pascal, 64289 Darmstadt (DE); Kirchner, Georg, 8071 Hausmannstätten (AT); Breuer, Stefan, 63739 Aschaffenburg (DE)
(74) Representative: LifeTech IP Spies & Behrndt Patentanwälte PartG mbB

(57) **Abstract**

A satellite coating (10) comprising a plurality of retro-reflective elements (no) enabling a satellite laser detection independently from an incidence direction of a laser beam (20), wherein the satellite coating (10) is formed as a micro-structured surface coating extending along at least one side (30) of the satellite (200).

## Description

The present invention relates to a satellite coating, a flight space object and, in particular, to retro-reflective foils on satellites such as CubeSats to allow for a laser-based detection independent from an attitude of the satellite.

### BACKGROUND

The number of satellites in outer space increases each year. At the same time the satellites become smaller and smaller. Since the exact position is not always known - especially after their operational lifespan has been exceeded - this represents a significant threat for potential collisions. Therefore, there is a need for detecting and monitoring all satellites, in particular after their deactivation.

One way of detecting satellites uses laser technology to detect the satellites based on reflections of a laser beam. This technology does not only detect the satellites, but measures also their distance, i.e. provides a ranging with high accuracy and is known as satellite laser ranging (SLR). There are satellites that support this laser ranging (cooperative targets) and satellites that do not (non-cooperative targets).

Since more than 50 years, this technique has been improved constantly, and allows now measuring distances to satellites with accuracies of few millimeters, using laser repetition rates of several kHz, and energies from a few micro Joules up to a few tens of millijoules. About 40 stations around the world for satellite laser ranging track more than 100 selected targets, whenever weather allows for. Many of these targets are equipped with retro-reflectors: Corner Cubes Reflectors (CCRs), which reflect any incident photons back to their source. They are opto-mechanics based reflectors with a size in the centimeter range. Because the working incident angle is limited (to +/- 45° for coated CCRs), multiple CCRs are often arranged on pyramid-like structures, allowing at least 180° semi-spherical visibility.

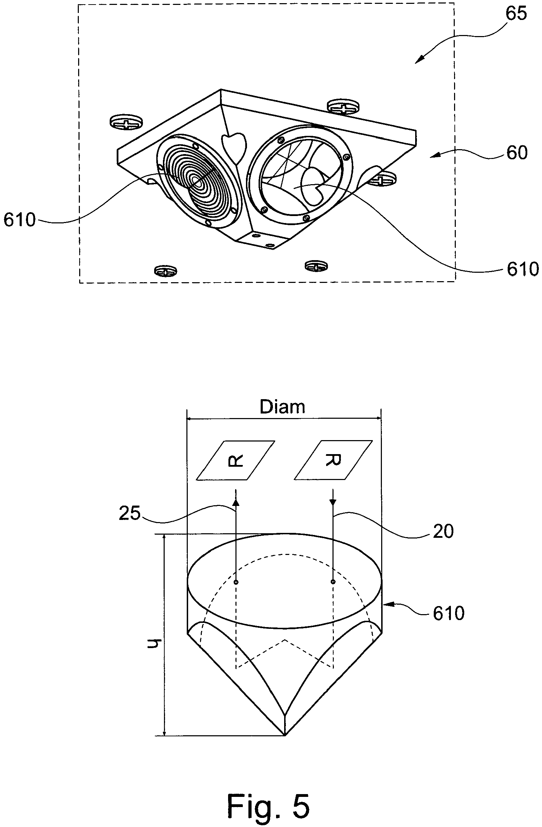

**Fig. 5** depicts a conventional retro-reflective device 60 designed as a CCR to be mounted on a surface 65 of a satellite (upper picture). The retro-reflective device 60 is formed as a pyramid with four surfaces, each including a retro-reflective element 610. One of the retro-reflective elements 610 is further illustrated in the lower portion and is configured to reflect an incident laser beam 20 in the opposite direction as the incident direction. Therefore, the return beam 25 is reflected by the retro-reflective element 610 back to the transmitter of the original laser beam 20, where it can be detected and utilized for ranging. For this, the laser beam 20 is reflected three times at surfaces in the retro-reflective element 610 which are formed in such a way that the reflections result in the return beam 25 as shown in Fig. 5. The conventional retro-reflective elements 610 have a diameter, Diam, of more than 1 cm and a height h, also exceeded 1 cm. As a result, the pyramid depicted in the upper portion of Fig. **5** protrudes a couple of centimeters from the surface 65.

For laser ranging to non-cooperative targets (without any CCRs), significantly more powerful (stronger) and complex laser systems have to be used to get photon echoes, due to diffuse only reflection. And even then, it works only for limited ranges (low earth orbits, LEO, up to about 2000 km) and larger targets (> 1 m²)_{.}

For smaller satellites, like CubeSats with a cubic size with an edge length of about 10 cm (which are stackable up to several such cubes), laser ranging is not in widespread use, as CCRs are hard to integrate into a CubeSat: The targets are too small for diffuse reflection; and there is limited space at all to mount CCRs or CCR pyramids. Therefore, they are nowadays tracked by on-board GPS devices. However, these devices are not available after end-of-life (usually after a few years). Alternatively, radar-based space debris tracking may be utilized. This, however, has only a limited accuracy of several 100 m.

Furthermore, since CubeSats are usually launched into orbits of 600 km or less, it takes less than 25 years until re-entry from such an orbit. Therefore, CubeSats are designed for relatively short life times (few years); after that, they are switched off, or just experience total failure. Consequently, any precise orbit determination (POD) is only possible using external methods (Radar, Laser Ranging) with the above-mentioned limitations.

Therefore, there is a need of alternative systems that can overcome the mentioned deficiencies of the conventional tracking systems.

### SUMMARY OF THE INVENTION

At least some of the above-mentioned problems are solved by a satellite coating according to claim 1 and a space flight object according to claim 6. The dependent claims refer to further advantageous realizations for the subject matters of the independent claims.

The present invention relates to a satellite coating comprising a plurality of retro-reflective elements enabling a satellite laser detection independently from an incident direction of a laser beam. The satellite coating is formed as a micro-structured surface coating extending along at least one surface of the satellite or its parts.

Optionally, the coating is formed as a foil. It may have a thickness in a range between 0.5 to 10 mm. The retro-reflective elements may have a maximum diameter within a range between 20 µm to 500 µm (or 300 µm), which are tiled along the surface of the satellite. The foil may also be a thin film coating.

Optionally, the material of the coating comprises at least one of the following: a resin, polyethylene terephthalate (PET), polyvinylidene fluoride (PVDF), polyvinyl fluoride (PVF) or other vinyl, acryl, polyester fiber, glass (e.g. fused silica).

Optionally, the satellite coating further comprises a protective layer configured to absorb at least one of the following radiations: UV-A-radiation, UV-B-radiation, UV-C-radiation, Roentgen-radiation, gamma-radiation, i.e. any or part of the radiation having shorter wavelength than visible light).

Optionally, the protective layer includes a metal layer vaporized on an outer surface of the satellite coating, which will be in direct contact with outer space. The term "outer space" shall be understood to cover anything outside the earth atmosphere.

Further embodiments relate to a space flight object with a satellite coating as defined before.

Optionally, the object (space flight object) further comprises multiple blades coated on one or on both sides (surfaces) with the satellite coating. The coating may also be applied on at least one side and may include other ways of depositing such as mounting the layer/foils/films.

Optionally, the blades are formed as triangles or rectangles and/or are attached to the object as hinged blades so that during takeoff of the space flight object the hinged blades are closed and are configured to open when in outer space.

Optionally, the object further comprises a folding mechanism configured to secure the hinged blades during launch of the space flight object in a closed position and to release the hinged blades upon arriving at a desired orbit (in outer space).

Optionally, the blades are configured to be rotatable about an angle of at least 120° so that an incident angle of the laser beam onto the satellite coating is in a range between 30° to 60°. This may ensure a high reflectivity of the incident laser beam.

Optionally, the satellite coating comprises a smooth surface and an opposite micro-structured surface (size of the structural elements are below 1 mm). Then, the satellite coating may be glued onto the blades with the smooth surface or with the opposite, micro-structured, surface.

Optionally, the spaceflight object may be one of the following: a CubeSat being formed as a cube, a launch vehicle, an upper stage of a launch vehicle, a tank for launch vehicle or any other man-made object.

Embodiments are especially suitable to provide cooperative targets, which may even be small objects such as CubeSats, whose orbits and motions may be determined very accurately (in millimeter-range) by the well-established method of Satellite Laser Ranging (SLR). About 40 SLR stations around the world cooperate within the International Laser Ranging Service (ILRS), tracking satellites from LEO (Low Earth Orbits - up to 3000 km), MEO (Medium Earth Orbits - like GNSS satellites: Glonass, Galileo, Beidou; in about 20.000 km) up to GEO (Geostationary Earth Orbits, 36.000 km). For successfully reflecting at least one photon back to the transmit device or to an associated telescope, all targets shall be equipped with retro-reflectors (conventionally with single corner cubes (CCR), CCR pyramids, or larger CCR panels e.g. > 80 CCRs on Galileo panels). Embodiments provide the same detection and ranging ability for the small CubeSats. The satellite coating may especially be suitable for laser detection and ranging (LADAR) applications.

The flip opening blades (or plates) may be covered on both sides with retroreflective foils according to embodiments allowing a determination of the orbit of decaying CubeSats by SLR (e.g. by standard SLR stations) with high accuracy (e.g. up to cm to few meters). Otherwise, without available SLR, the orbit determination needs to be done by large Radar stations, resulting in so-called TLE (two-line-elements) with limited accuracy (in km range). This inaccuracy is becoming nowadays completely unacceptable with the increasing load of space debris in orbit.

Further advantages of embodiments relate to:
- In contrast to CCRs, the satellite coating essentially does not cause any shadowing of or interference with of e.g. solar cells, antennas etc. The limited surfaces of CubeSats can be covered completely with solar cells or other instrumentation to ensure sufficient power supply.
- The satellite coating does not need any power (as opposed e.g. to GPS modules, microwave transmissions etc.).
- Even for the small-sized CubeSats, debris ranging is made possible.
- There is no installation space needed or it can be simply provided by the additional blades attached to the satellite.
- The satellite becomes visible from all sides, whereas at least two pyramids (each with 4 CCRs) would be needed for conventional reflectors deteriorating weight and dimensions.
- There are no restrictions during launch - even though multiple CubeSats are densely packed on one launch vehicle. Otherwise, it usually would be impossible to mount any pyramid-like structure protruding from the exemplary 10x10x10 cm3 surface of a CubeSat (which would be necessary to achieve a complete spherical coverage).
- Equipping CubeSats with retroreflective foils, basically arrays of small (100 ... 200 µm) micro-prisms, and unfolding them in outer space, allows to use SLR with standard SLR stations, independent of incident angles.

### BRIEF DESCRIPTION OF THE DRAWINGS

Various embodiments of the present invention will be described in the following by way of examples only, and with respect to the accompanying drawings, in which:
- Fig. 1: depicts a satellite coating according to an embodiment of the present invention.
- Figs. 2A-2C: illustrate embodiments of the satellite coating with the retroreflective elements.
- Figs. 3A, 3B: show examples for satellites (CubeSat) according to further embodiments.
- Fig. 4: illustrates a fixation of the blades during takeoff.
- Fig. 5: illustrates a conventional retro-reflective device.

### DETAILED DESCRIPTION

Various examples will now be described more fully with reference to the accompanying drawings in which some examples are illustrated.

Accordingly, while examples are capable of various modifications and alternative forms, the illustrative examples in the figures and will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

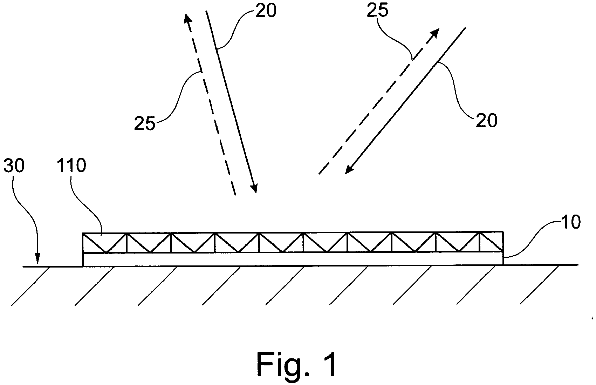

**Fig. 1** shows a satellite coating 10 according to an embodiment of the present invention. The satellite coating 10 is formed on a surface 30 of the satellite or a part thereof (not shown in Fig. 1) and extends along this surface 30. The satellite coating 10 includes a plurality of retro-reflective elements 110, each comprising a micro-structured element. The micro-structured elements 110 are retroreflective implying that an incident laser beam 20 is reflected into a return beam 25 directed essentially in the opposite direction of the incident laser beam 20. This is independent of the incident angle of the incident laser beam 20.

The retro-reflective elements 110 may be formed by different structures. One possibility is to form micro-structured prisms or pyramids or as spherical retroreflective element. According to another embodiment, the retro-reflective elements 110 are formed in a material including glass or any plastic material or resin.

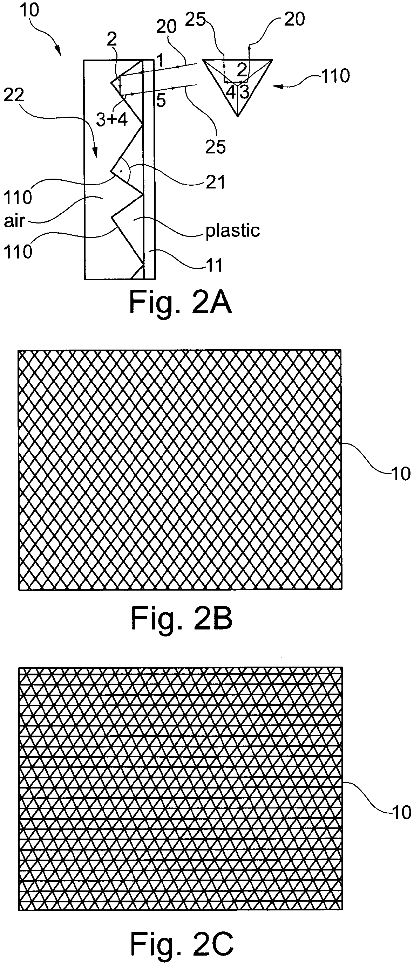

**Fig. 2A** shows on the left-hand side a cross-sectional view through the satellite coating 10 with an incident laser beam 20 being reflected by the retro-reflective elements 110 formed as prismatic reflectors or pyramids. On the right-hand, Fig. 2 shows a top or front view on one the retro-reflective elements 110 with three reflective surfaces.

The incident laser beam 20 is refracted at the incident point 1 and is reflected three times (at points 2, 3, 4) on the three sides of the exemplary triangular prism 110 (see right top view). Finally, the return beam 25 is again refracted at point 5 to propagate back, essentially parallel to the incident direction of the incident laser beam 20.

The dihedral angles 21 between the surfaces of an individual prismatic reflector may be 90° or slightly larger than 90°. The exact dihedral angles 21 may differ among the plurality of the retro-reflective elements, also due to production tolerances. Dihedral angles 21 larger than 90° typically result in a reduction of the photon response back at the source, due to a wider spread of the directions of the backpropagated photons. However, on the one hand this reduction is compensated by a much larger area covered by multiple retro-reflective elements as compared to a single CCR and on the other hand the spread of the directions of the backpropagated photons allows accounting for velocity aberration resulting from the relative motion between the source and the satellite to be detected.

In the depicted embodiment, the satellite coating 10 comprises a cover sheet 11 which is formed as a plate or foil representing the outer surface exposed to the laser radiation 20. On the other side, opposite to the cover sheet 11, a space or portion 22 (with air or void of air) may face the satellite surface 30 and may be attached or glued to satellite surface 30. Hence, the cover sheet 11 represents the outer surface and the portion 22 may be at least partially filled with adhesive material in order to glue the satellite coating 10 to the satellite surface 30. Apart from adhesive material, the portion 22 may also be filled with another material which should have a different refractive index than the material of the retroreflective elements 110 (to ensure the reflection).

According to another embodiment, the satellite coating 10 is attached or glued to the surface 30 via the cover sheet 11 so that the portion 22 is the outer surface. It is understood, that the satellite coating 10 can be formed to exhibit the retroreflective property also on the opposite side, i.e. the laser beam 20 may hit the retro-reflective elements 110 via the portion 22. For the application in outer space, the rough surface will not weaken the reflectivity, because dirt, moisture etc. is not an issue.

The satellite coating 10 in this embodiment is formed by a plastic material where the pyramids or micro-prisms represent an interface between air or vacuum and as the exemplary plastic material. Of course, there are other known retroreflective elements (e.g. spherical) which may also be implemented in embodiments. Possible materials are: (synthetic) resin, polyethylene terephthalate (PET), polyvinylidene fluoride (PVDF), polyvinyl fluoride (PVF) or other (cast) vinyl, acryl, polyester fiber or combinations thereof. Other materials such as glass may also be used, e.g. fused silica, which is qualified for space applications.

According to yet another embodiment, the satellite coating includes a protection for high energy radiation present in outer space. For example, the cover sheet 11 may comprise a UV-protecting material. In addition, or alternatively, a protection layer (e.g. a thin metal layer) may be vaporized on an outer surface which is in direct contact with outer space. Since oxidation is no issue in outer space, the layer may be formed as pure metallic layer (without any passivation or any corrosion resistant material).

Likewise, the protection layer may comprise a material that is transparent for the laser beam 20, but absorbs effectively the high energy outer space radiation such as UV- (UV-A, UV-B, UV-C), Roentgen-, gamma-radiation. This may be adjusted also by the thickness of the protection layer, which may be thin enough to provide sufficient transparency for the laser beam 20, but thick enough to provide sufficient protection for high energy outer space radiation (e.g. less than 5 µm or less then 100 nm). The suitable laser beam 20 for the detection may be generated by a ruby laser (wavelength 694 nm) or a Nd:YAG laser (wavelength of e.g. 946 nm, 1064 nm or higher) or another infrared laser.

**Fig. 2B** and **Fig. 2C** show pictures of exemplary satellite coatings 10 which are formed as foils with micro-prisms in a plastic material. In the embodiment of Fig. 2B the retro-reflective elements 110 are formed in a honey-comb shape, whereas in Fig. 2C as triangular prisms (or triangular pyramids).

The depicted thin foils include micro-prism patterns and emulate a large amount of standard CCRs, in particular, when distributed on a larger surface. These foils are thin (> 1 mm or < 5mm), inexpensive, flexible, and of very low weight. If used for CubeSats in LEO orbits of up to 600 km or so, the maximum life time of about 25 years will be ensured - after this time, any satellite launched to this altitude will re-enter atmosphere.

To be effective for laser detection, the retro-reflective elements 110 have a minimum size, which is significantly lower than the conventional CCRs with a size of 10 mm or 20 mm. These conventional CCRs have been tested successfully on satellites in up to 600 km orbits. To ensure a high reflective efficiency, a large area will be covered by the foil. For example, the reflective area may be in the range from about 75 mm² to about 2500 mm². Tests have shown that this would be sufficient for laser ranging with a standard SLR station. These SLR stations may send bursts of signals with each 10¹⁴ photons and are able to detect a single photon reflected back from the satellite.

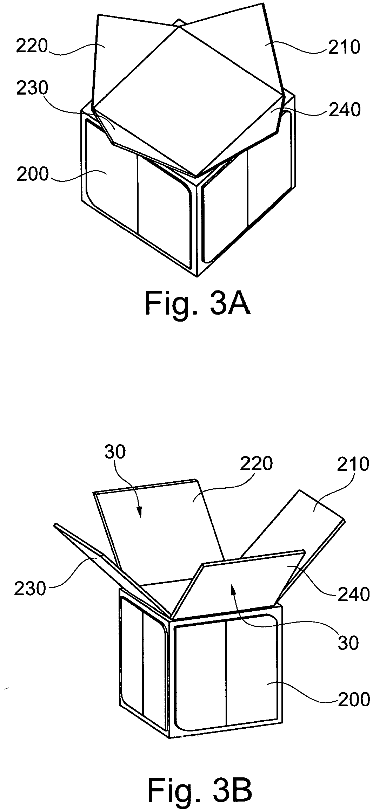

**Fig. 3A** and **Fig. 3B** show examples for satellites 200 or any other space flight object according to embodiments. The exemplary satellites 200 may be so-called CubeSats which are formed in a cubic form with an edge length in the range between 5 to 20 cm or about 10 cm. The external surfaces of the satellite 200 may be covered by photovoltaic modules or solar cells in order to generate electric energy. According to embodiments, a plurality of blades (plates or flaps) 210, 220, ... are hinged mounted on at least at one side of the satellite 200 to allow the blades 210, 220, ... to pivot or rotate from a closed position, where the blades 210, 220, ... are parallel to an external surface of the satellite 200 and an open position, as shown in Figs. 3A and 3B, where the blades 210, 220, ... project in different, angled directions from the external surface.

According to embodiments, the blades 210, 220, ... are coated with the satellite coating 10 on both sides or at least on one side to allow an effective reflection independently of the concrete orientation of the satellite 200 in space. The opening angles may be selected such that a laser beam 20 from any direction in the three-dimensional space will hit at least one surface of the blades 210, 220,... in an angular range between 40° and 60°, which is ensured in the depicted configuration of Fig. 3A and 3B, when both sides are coated. This will allow an effective reflection by the retro-reflective element 110 from any direction of the incident laser beam 20.

The embodiment of **Fig. 3B** differs from the embodiment of **Fig. 3A** only in that the blades 210, 220, ... are formed in triangular form (Fig. 3A) or rectangular/square form (Fig 3B), both being attached to the satellite 200 via hinges to close all blades 210, 220, ... on top of each other so that they do not protrude during the takeoff of the satellite 200. The square blades 210, 220, ... may use the full area (e.g. 9x9 cm roughly) to increase the reflective area by a factor of four.

In the exemplary embodiments as shown in Figs. 3A and 3B there are four blades formed at the satellite 200, a first blade 210, a second blade 220, a third blade 230 and a fourth blade 240 which are attached along edges of one rectangular external surface of the cubic satellite 200. According to another embodiment, the blades 210, 220, ... may be mounted to the satellite 200 at edges of different external, square surfaces. The positioning of the blades 210, 220, ... can be arbitrary as long as the correct functioning of the satellite is not at risk.

Thus, the multiple blades 210, 220, ... allow laser reflections independent of the attitude of the satellite 200 (many of them may start to rotate or tumble after end-of-life). During launch, the four triangular blades 210, 220, ... are collapsed - and fixed - on an upper surface. After launch, this fixation can be released, and with pre-tensioned springs all blades 210, 220, ... may rotate by 135° - at the end, they may show a 45° slope to the vertical (in this sketch) sides of the satellite 200.

If the satellite coating 10 is e.g. glued or applied on each side of the triangular blades 210, 220, ... , each coating 10 can accept a +/-45° cone to reflect laser photons 20. The total arrangement may thus allow for a continuous spherical coverage: the satellite reflects photons independent from its attitude and/or incident angle of the laser beam back to the transmitter.

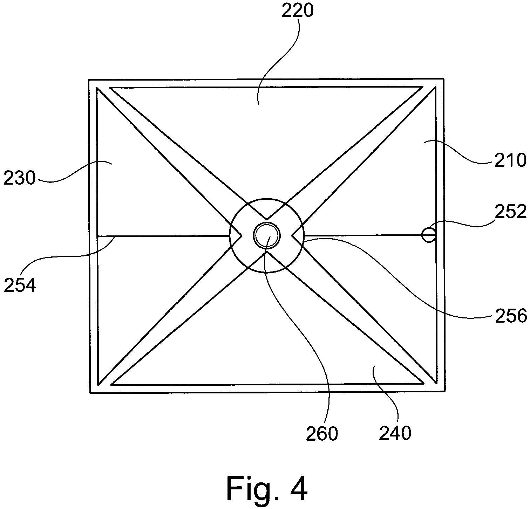

**Fig. 4** illustrates an exemplary fixation of the blades 210, 220, ... during takeoff. In this embodiment, the blades 210, 220, ... are formed as triangles which in the closed position may be in contact with the body of the satellite 200 or at least aligned in parallel.

To secure the blades 210, 220, ... onto the satellite 200, a folding mechanism may be utilized. This mechanism includes a stick 254 with a central engagement ring 256 extending over the external surface of the satellite 200. The engagement ring 256 is formed such that it holds all four blades 210, 220, 230, 240. They cannot pivot into the open position. In addition, in the folding mechanism the stick 254 comprises on one side a hinge or another pivotable connection to the satellite 200, whereas on the opposite side, a magnet 252 (e.g. a neodymium magnet) may be formed in the satellite 200. The stick 254 may comprise at this end portion a ferromagnetic material in order to secure the stick 254 during takeoff of the satellite 200.

The magnet 252 may be formed inside the satellite 200 and may be surrounded by a coil or a solenoid which, upon activation, is configured to compensate the magnetic field of the permanent magnet 252. As a consequence, the stick 254 is no longer secured by the magnet 252 and is free to open. In addition, according to the folding mechanism, the hinged blades 210, 220, ... may include a spring (for example a preloaded spiral spring) which provides a bias force for the blades 210, 220, ... towards the open position. Therefore, whenever the attachment force of the stick 254 to the magnet 252 is turned off, the blades 210, 220, ... will automatically open in the position as for example shown in Fig. 3A. The same mechanism can also be applied to the embodiment of Fig. 3B, whereas at least the most outer blade comprises a portion with a ferromagnetic material which is held by a permanent magnet in the satellite 200. Again, the magnet force can be compensated by a coil upon activation, when the satellite reaches its orbit. The blades 210, 220, ... will automatically open by the pre-strained spring mechanism.

This mechanism is of advantage if the center portion 260 of the area with the blades 210, 220, ... is covered during the launch or does not allow a magnet to be placed there. Hence, in this case, the diagonal stick 254 may be used. Furthermore, in this case, in the center area 260, an exemplary CCD optic (which may be used for earth/star imaging) can be present and the ring 256 can nevertheless extend around the exemplary CCD optic so that this optic is not blocked by the blades 210, 220, .... If the opening mechanism for some reason fails, this optic can be used as a backup option for the detection of the satellite 200 based on laser beams 20; and it also can be used to verify the proper function or failure of the opening mechanism.

Therefore, during launch the magnetic interlock fixes all four blades 210, 220, ... on the upper surface of the satellite 200. Once in orbit, a short current pulse applied to an electro-magnetic device (the solenoid or coil) may release the interlock. The blades 210, 220, ... will open driven by the pre-loaded springs, optionally with a soft speed-controlling brake. Another advantage of embodiments is that the upper side of the satellite 200, which during launch is covered by the folded blades 210, 220, ..., can be used after opening by solar cells, sensors, cameras, communication systems, antennas etc.

According to yet another embodiment, a small ferromagnetic piece may be attached to the tip of each blade 210, 220, .... A small solenoid magnet or any permanent magnet can be arranged at the central position 260 of the surface to hold all four blades 210, 220, ... in the closed position. Around this permanent magnet, again a solenoid or a magnet coil can be wrapped to compensate upon activation the permanent magnet. Each blade 210, 220, ... may again be preloaded with a small spiral spring or another bias mechanism. A short electric current pulse through the solenoid is enough to compensate the permanent magnetic field and cause an automatic opening of all blades 210, 220, .... In the open positions, the solenoid can again be turned off. In this embodiment, the center portion 260 may be covered by the tips of the blades 210, 220, ....

If the permanent magnet 252 is not tolerable on the satellite 200, then a mechanical interlock can be used, which is unlocked by a small electrical pulse via a magnetic coil.

According to further embodiments, the blades 210, 220, ... may also be opened by one or more small servo motors or any other electric device which would also allow the reversing action if needed or if desired.

In any case, these or other arrangements can keep the blades 210, 220, ... securely locked during the launch and allow a release only after launch when electric power is available.

According to further embodiments, a damping mechanism can be included in order to control the opening speed of the blades 210, 220, .... There are various possibilities which are well-known to someone skilled in the art (based on a mechanical or an electro-magnetic mechanism). Dampers may be provided in order to slow down the opening speed.

In summary, according to embodiments, each blade 210, 220, ... can rotate about an axis on an edge of the satellite 200. During launch of the satellite 200, the blades 210, 220, ... are folded by a folding mechanism, e.g., on a front side of the satellite 200 or any other space flight object. In particular, this folding mechanism (as shown in Fig. 3A, 3B and Fig. 4) may be adapted to ensure that no parts protrude and can thus not interfere with or block the release of the exemplary CubeSat 200 after launch.

Advantageous aspects of embodiments may be summarized as follows:
- The satellite coating 10 may be applied on small, flip opening plates that can be easily added to small satellites such as CubeSats.
- The coating 10 may cover both sides of the blades and may be comprised of a µ-prism reflecting foil (the prisms may be a maximum size of less than 1 mm or less than 500 µm) to allow easy satellite laser ranging to CubeSats, independent of laser incident angles (in case of tumbling satellites).
- During launch: no extensions outside the exemplary (10x10x10) cm³ limits exist.
- After launch: the plates are flipped open, leaving all sides of CubeSats e.g. for solar cells, antennas etc.
- The satellite coating 10 may be applied as micro-structured surfaces on any target in space, with the main goal of allowing SLR from any SLR station of the ILRS network.
- Small satellites, e.g. CubeSats etc., may use some unfolding mechanisms (see Fig. 4) to suffice compactness during launch and uncover other modules once deployed in space.
- Medium satellites with sufficient surface area may or may not be equipped with an unfolding mechanism.
- Large satellites can be covered by the satellite coating 10 without needing any unfolding mechanism.
- The satellite coating 10 may likewise be utilized with any upper stages, tanks or other parts of launch vehicles, which remain for some time in space. Micro-structured surfaces (with the coating 10) can be applied on more than one side of such a target. This would allow for attitude and motion (spin) determination via SLR.
- Such micro-structured surfaces can be used for easy SLR tracking short before re-entry of any spaceflight object 200 or target; better knowledge of orbit parameters during this stage might be useful for better re-entry predicts; due the low orbits in this situation any SLR station potentially can track these targets.
- SLR to such micro-structured surfaces allows tracking of any non-functional satellite etc., they do not need any power, they do not become non-operational etc.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

### List of reference signs

- 10: satellite coating (micro-structured surface)
- 20: incident laser beam
- 21: dihedral angle
- 25: reflected laser beam
- 30: side/surface of a satellite/space flight object
- 60: conventional retro-reflective device (CCR)
- 65: surface of a (large) satellite
- 110: (micro-structured) retro-reflective elements
- 200: satellite/space object
- 210, 220,..: blades
- 252: permanent magnet
- 254: stick
- 256: ring (to block blades)
- 260: central portion
- 610: conventional retro-reflective element

## Claims

1. A satellite coating (10) comprising:
a plurality of retro-reflective elements (110) enabling a satellite laser detection independently from an incident direction of a laser beam (20),
wherein the satellite coating (10) is formed as a micro-structured surface coating extending along at least one surface (30) of the satellite (200) or its parts.

2. The satellite coating (10) according to claim 1, wherein the coating (10) is formed as a foil with a thickness in a range between 0.5 to 10 mm and the retro-reflective elements (110) having a maximum diameter within a range between 20 µm to 500 µm and being tiled along the surface (30) of the satellite (200).

3. The satellite coating (10) according to claim 1 or claim 2, wherein the material of the coating (10) comprises at least one of the following: a resin, polyethylene terephthalate (PET), polyvinylidene fluoride (PVDF), polyvinyl fluoride (PVF) or other vinyl, acryl, polyester fiber, glass.

4. The satellite coating (10) according to one of the preceding claims, further comprising:
a protective layer configured to absorb at least one of the following radiations: UV-A-radiation, UV-B-radiation, UV-C-radiation, Roentgen-radiation, gamma-radiation.

5. The satellite coating (10) according to claim 4, wherein the protective layer includes a metal layer vaporized on an outer surface of the satellite coating (10) to be in direct contact with outer space.

6. A space flight object (200), especially a satellite, with a satellite coating (10) according to one of the preceding claims.

7. The object (200) according to claim 6, further comprising multiple blades (210, 220, ...) coated on one or on both sides (30) with the satellite coating (10).

8. The object (200) according to claim 7, wherein the blades (210, 220, ...) are formed as triangles or rectangles and are attached to the space flight object (200) as hinged blades so that during takeoff of the space flight object (200) the hinged blades (210, 220, ...) are in a closed position and are configured to open when in outer space.

9. The object (200) according to claim 8, further comprising a folding mechanism (252, 254, 256) configured to secure the hinged blades (210, 220, ...) during launch in a closed position and to release the hinged blades (210, 220, ...) upon arriving at a desired orbit.

10. The object (200) according to one of claims 7 to 9, wherein the blades are configured to be rotatable about an angle of at least 120° so that an incident angle of the laser beam (20) onto the satellite coating (10) is in a range between 30° to 60°.

11. The object (200) according to one of claims 6 to 10, wherein the satellite coating (10) comprises a smooth surface (11) and an opposite micro-structured surface and is glued onto the blades (210, 220, ...) with the smooth surface (11) or with the opposite micro-structured surface.

12. The object (200) according to one of claims 6 to 11, wherein the object is one of the following: a CubeSat being formed as a cube, a launch vehicle, an upper stage of a launch vehicle, a tank for launch vehicle.
